(19) Europäisches Patentamt
European Patent Office
Office européen des brevets

(11) Publication number: **0 534 472 A1**

(12) **EUROPEAN PATENT APPLICATION**

(21) Application number: **92116484.4**

(22) Date of filing: **25.09.92**

(51) Int. Cl.[5]: **C09D 183/07**, C09J 183/07, C08J 5/12

(30) Priority: **27.09.91 JP 277224/91**

(43) Date of publication of application: **31.03.93 Bulletin 93/13**

(84) Designated Contracting States: **DE FR GB**

(71) Applicant: **Shin-Etsu Chemical Co., Ltd.**
**6-1, Otemachi 2-chome**
**Chiyoda-ku Tokyo 100(JP)**

(72) Inventor: **Okami, Takehide**
**3-19-1, Isobe**
**Annaka-shi, Gunma-ken(JP)**

(74) Representative: **Tiedtke, Harro, Dipl.-Ing.**
**Patentanwälte Tiedtke-Bühling- Kinne & Partner Bavariaring 4 Postfach 20 24 03**
**W-8000 München 2 (DE)**

(54) **Primer composition adapted for adhesion to condensation reaction-type silicone rubbers.**

(57) A primer composition comprises, in combination, an organopolysiloxane having at least two alkenyl groups in one molecule, an organohydrogenpolysiloxane having at least two hydrogen atoms bonded to silicon atoms in one molecule, a platinum catalyst, and an organosilicon compound having the following average unit formula,

$R^1_aX_bSiO_{(4-a-b)/2}$

in which $R^1$ represents a member selected from the group consisting of unsubstituted or substituted monovalent hydrocarbon groups, acryloxy group, a methacryloxy group and an epoxy group, X represents a hydrolyzable group, $0 \leqq a \leqq 3$, and $2 \leqq b \leqq 4$ provided that $2 \leqq a+b \leqq 4$, the organosilicon compound having at least two hydrolyzable groups bonded to the silicon atom in one molecule. The primer composition is effective in adhesion between various substrates and condensation reaction-type silicone rubber therethrough. The composition keeps high adhesion force under severe conditions.

EP 0 534 472 A1

## BACKGROUND OF THE INVENTION

### Field of The Invention

This invention relates to the art of silicone rubber and more particularly, to a primer composition which is effective in adhesion between condensation reaction-type silicone rubbers and metal or synthetic resin substrates.

### Description of The Prior Art

Recently, silicone rubbers increase their utility in various fields. There is a high demand for silicone rubbers which have good adhesion to substrates of various materials such as metals, synthetic resins and the like.

In order to impart good adhesion to condensation reaction-type silicone rubbers, usual practice is to add carbon functional silanes or silane coupling agents such as amino silanes to the silicone rubber as an adhesion aid, thereby imparting self-adhesiveness to the rubber. By the addition, the adhesiveness is improved but there arises the problem that surface release properties are lowered or the hardness of the rubber is increased during heating.

Another attempt is to improve the adhesiveness by the use of a primer composition which comprises a mixture of a carbon functional silane and a titanium salt of an organic acid. However, the known primer composition is not satisfactory with respect to the adhesion durability at a contact portion between a substrate and a silicone rubber member on which excessive strain is more likely to be exerted, e.g. a contact portion of a duplicator roll between a roll core and a silicone rubber surface layer.

## SUMMARY OF THE INVENTION

It is accordingly an object of the invention to provide a primer composition which is employed for adhesion between condensation reaction-type silicone rubbers and substrates of various materials such as metals or synthetic resins.

It is another object of the invention to provide a primer composition which ensures long-term adhesion between condensation reaction-type silicone rubbers and the substrates and have thus improved durability of the adhesion.

The above objects can be achieved, according to the invention, by a primer composition which comprises:

(A) an organopolysiloxane having at least two alkenyl groups in one molecule;

(B) an organohydrogenpolysiloxane having at least two hydrogen atoms bonded to silicon atoms in one molecule;

(C) a platinum catalyst; and

(D) an organosilicon compound having the following average unit formula,

$$R^1_aX_bSiO_{(4-a-b)/2}$$

in which $R^1$ represents a member selected from the group consisting of unsubstituted or substituted monovalent hydrocarbon groups, acryloxy group, a methacryloxy group and an epoxy group, X represents a hydrolyzable group, $0 \leqq a \leqq 3$, and $2 \leqq b \leqq 4$ provided that $2 \leqq a+b \leqq 4$, the organosilicon compound having at least two hydrolyzable groups bonded to the silicon atom in one molecule.

## BRIEF DESCRIPTION OF THE DRAWINGS

Fig. 1 is a schematic perspective view of a test piece used for measuring adhesive strength under shear; and

Fig. 2 is a sectional view of a test roll used for a roll durability test using a primer composition of the invention.

## DETAILED DESCRIPTION AND EMBODIMENTS OF THE INVENTION

The respective ingredients used in the primer composition of the invention are described.

The (A) ingredient is an organopolysiloxane which should have at least two alkenyl groups in one molecule. The organopolysiloxane should preferably have a viscosity of from 50 to 200,000 centistokes, more preferably from 100 to 100,000 centistokes, at 25 °C. The alkenyl group should preferably have from 2 to 8 carbon atoms and includes, for example, a vinyl group, an allyl group, a 1-methyl-2-propenyl group, a hexenyl group, a $\gamma$ -acryloxypropyl group, a $\gamma$ -methacryloxypropyl group and the like. Of these, vinyl group is preferred. Aside from the alkenyl groups, the organopolysiloxane may have other unsubstituted or substituted hydrocarbon groups having from 1 to 10 carbon atoms, preferably from 1 to 8 carbon atoms. Such hydrocarbon groups include, for example, alkyl groups such as a methyl group, an ethyl group, a propyl group, a butyl group and the like, aryl groups such as a phenyl group, a tolyl group and the like, aralkyl groups such as a benzyl group, a $\beta$ -phenylethyl group and the like, and the above-indicated groups whose hydrogen atoms are substituted partly or wholly with a halogen atom, such as a chloromethyl group, a 3,3,3-trifluoropropyl group and the like.

Specific examples of the organopolysiloxane include linear organopolysiloxanes of the following chemical formulae

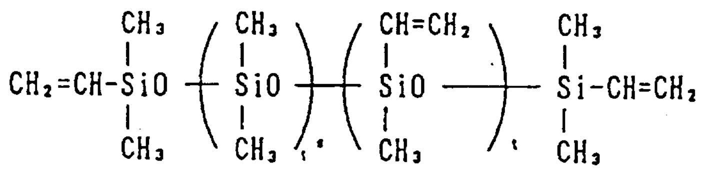

,

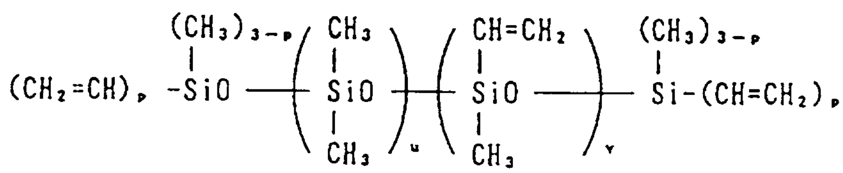

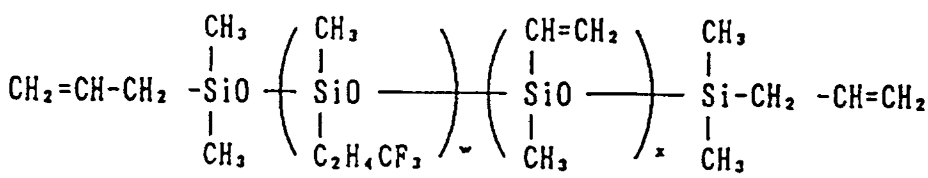

wherein p is an integer of 2 or 3, s, u and w are independently a positive integer, and t, v and x are independently zero or a positive integer provided that s + t, u + v and w + x are, respectively, a positive integer not larger than 2000.

The organopolysiloxanes of the (A) ingredient are not limited to those linear structures but may have a partial branching structure. The organopolysiloxanes may be used singly or in combination.

The organohydrogenpolysiloxane which is used as the (B) ingredient of the primer composition of the invention should have at least two hydrogen atoms joined to the silicon atom or atoms. The organohydrogenpolysiloxane functions as a crosslinking agent for the organopolysiloxane (A). The organohydrogenpolysiloxane (B) may have an organic group or groups joined to the silicon atom or atoms. Such organic group may be unsubstituted or substituted hydrocarbons other than the alkenyl group as defined with respect to the organopolysiloxane (A). Examples of the organohydrogenpolysiloxane (B) include those of the following general formulae

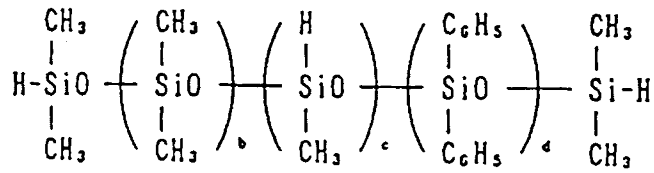

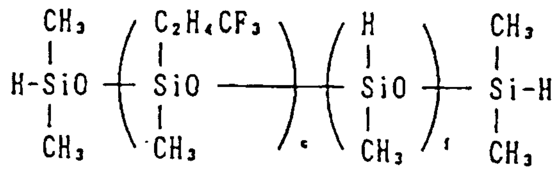

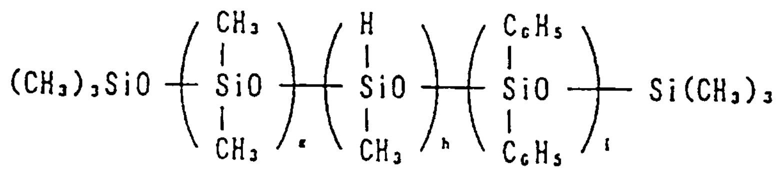

wherein b,c,d,e,f,g and i are, respectively, zero or a positive integer, and h is an integer not smaller than 2, provided that the number of the silicon atoms is not larger than 400; and

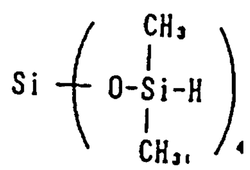
、
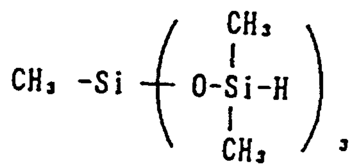

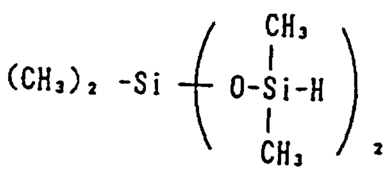
、
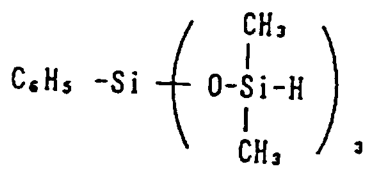

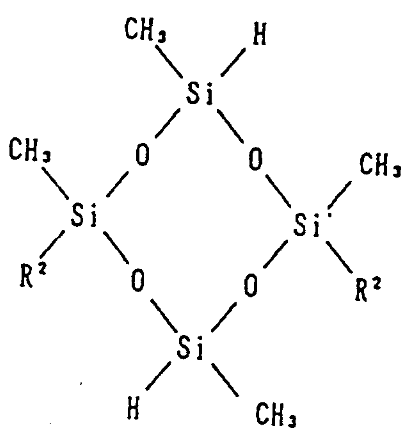

wherein $R^2$'s are independently a hydrogen atom, a methyl group, a propyl group or a trimethylsiloxy group. The organohydrogenpolysiloxane may have a linear, branched, cyclic or three-dimensional network structure. Of course, these organohydrogenpolysiloxanes may be used singly or in combination.

The organohydrogenpolysiloxane (B) is used in such an amount that the amount of the hydrogen atoms joined to the silicon atom or atoms present in the (B) ingredient 1.0 to 20.0 times by mole, preferably from 1.2 to 10.0 times by mole, the total amount by mole of the alkenyl groups present in the organopolysiloxane (A).

The platinum catalyst used as the (C) ingredient in the primer composition of the invention is a catalyst for addition reaction and acts as a promoter for curing.

Such catalysts are not critical and include, for example, platinum black, solid platinum supported on carriers such as alumina, silica and the like, chloroplatinic acid, alcohol or siloxane-modified chloroplatinic acid, complexes of chloroplatinic acid and olefins, complexes of platinum and vinyl siloxanes and the like.

If the catalyst is solid, it should preferably be divided into fine pieces or it is preferred to use a carrier having a small size and a large specific surface area in order to ensure good dispersability. With chloroplatinic acid or complexes of chloroplatinic acid and olefins, it is preferred to dissolve these compounds in solvents such as alcohols, ketones, ethers or hydrocarbons.

The catalyst may be used in a so-called catalytic amount sufficient to attain a desired curing rate. In order to attain good economy or to obtain a cured product with good properties, the amount ranges from 0.1 to 500 ppm, calculated as platinum, based on the total amount of the (A) and (B) ingredients. More particularly, if a platinum catalyst of the type which is miscible with the siloxane component, e.g. alcohol-modified or siloxane-modified chloroplatinic acid, the amount preferably ranges from 0.1 to 100 ppm, calculated as platinum, based on the total amount of the (A) and (B) ingredients. With the solid catalysts such as platinum black, the amount preferably ranges from 20 to 500 ppm calculated as platinum.

The organosilicon compound used as the (D) ingredient of the primer composition of the invention acts to bond or adhere to condensation reaction-type silicone rubber. The (D) ingredient is an organosilicon compound represented by the following average unit formula wherein at least two hydrolyzable groups joined to the silicon atom or atoms should be present in one molecule

$$R^1_aX_bSiO_{(4-a-b)/2}$$

In the formula, $R^1$ represents an unsubstituted or substituted monovalent hydrocarbon group having from 1 to 10 carbon atoms, preferably from 1 to 8 carbon atoms, an acryloxy group, a methacryloxy group or an epoxy group. Examples of the monovalent hydrocarbon group include an alkyl group such as a methyl group, an ethyl group, a propyl group, a hexyl group or the like, a cycloalkyl group such as a cyclohexyl group, an alkenyl group such as a vinyl group, an allyl group or the like, an aryl group such as a phenyl group, a tolyl group or the like, an aralkyl group such as a benzyl group, a phenylethyl group or the like, and the above-indicated groups whose hydrogen atoms are substituted partly or wholly with a halogen atom, e.g. a chloromethyl group, a 3,3,3-trifluoropropyl group or the like.

The acryloxy group, methacryloxy group and epoxy groups are, respectively, of the following formulae

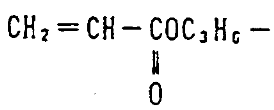
,
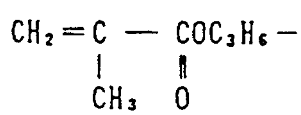

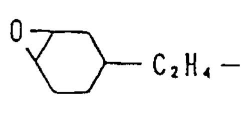
,
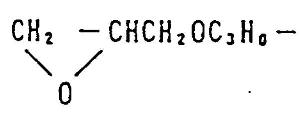
.

X represents a hydrolyzable group. Examples of the hydrolyzable group include an alkoxy group having from 1 to 8 carbon atoms such as a methoxy group, an ethoxy group, a propoxy group, a methoxyethoxy group, an ethoxyethoxy group or the like, an acyloxy group having from 1 to 8 carbon atoms such as an acetoxy group, a propionoxy group, a butyroyloxy group or the like, and an alkenyloxy group having from 1 to 8 carbon atoms such as an isopropenyloxy group, an isobutenyloxy group, a 1-ethyl-2-methylvinyloxy group, a 1-methylvinyloxy group or the like.

Specific examples of the organosilicon compound include methyltrimethoxysilane, methyltriethoxysilane, vinyltrimethoxysilane, tetraethoxysilane, tetrapropoxysilane, methyltriacetoxysilane, vinyltris(1-methylvinyloxy)silane, vinyltris( β -methoxyethoxy)silane, γ -methacryloxypropyltrimethoxysilane, γ -acryloxypropyltriethoxysilane, allyltrimethoxysilane, allyltriethoxysilane, γ -glycidoxypropyltrimethoxysilane, β -(3,4-epoxycyclohexyl)ethyltrimethoxysilane, and partially hydrolyzed condensates of one or more compounds indicated above.

The amount of the (D) ingredient is in the range of from 5 to 50 parts by weight, preferably from 10 to 30 parts by weight, per 100 parts by weight of the (A) ingredient.

The primer composition of the invention is obtained by uniformly mixing the (A), (B), (C) and (D) ingredients.

If necessary, the primer composition of the invention may be diluted with organic solvents so as to facilitate the coating operation of the composition. Examples of the organic solvent include toluene, xylene, benzene, hexane, trichloroethylene, perfluoroethylene, ethyl acetate, ethanol, isopropanol, butanol, acetone, methyl ethyl ketone, tetrahydrofuran, ligroin, gasoline for rubber and the like. Taking into account the volatility during coating operations, these solvents should be properly used.

The primer composition of the invention may further comprise a silica filler and a silicone resin which has $RSiO_{3/2}$ units wherein R represents an unsubstituted or substituted monovalent hydrocarbon group having from 1 to 10, preferably from 1 to 6 carbon atoms and $SiO_{4/2}$ units. The monovalent hydrocarbon group represented by R may be ones as defined with respect to $R^1$. The addition of these additives contributes to improving the strength of cured film.

In order to improve a heat resistance, the composition may further comprise red oxide, cerium oxide, cesium hydroxide, cerium salts of fatty acids, iron salts of fatty acids, titanium oxide, carbon black and the like. For coloration, any known pigments may be added. These additives may be added in amounts not impeding the characteristic properties of the composition of the invention.

The composition of the invention should preferably contain adhesion aids by which adhesive strength under shear can be further improved. The adhesion aids include alkoxysiloxy group-containing compounds as set out in Japanese Patent Publication No. 53-21026, compounds which have epoxy group-containing hydrocarbon groups as set forth in Japanese Patent Publication No. 53-13508, and compounds which alkoxysiloxy group and epoxy group-containing compounds in Japanese Patent Publication No. 59-5219. These publications are incorporated herein by reference. Although not limitative, specific examples include organosilicon compounds of the following chemical formulae

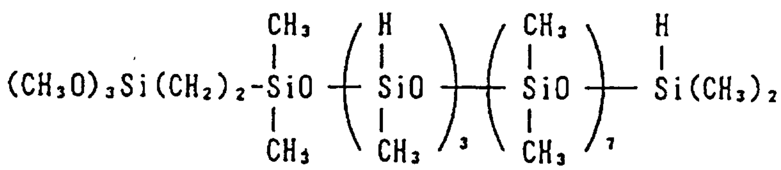

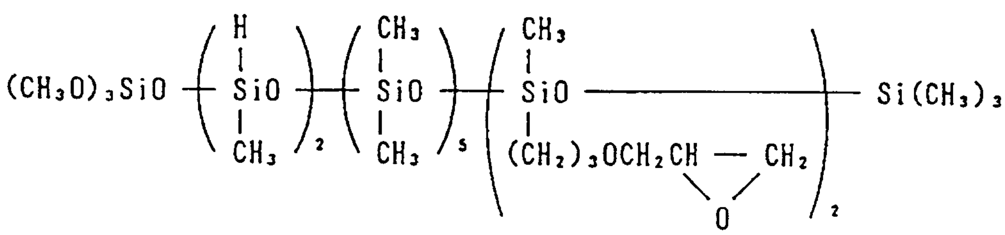

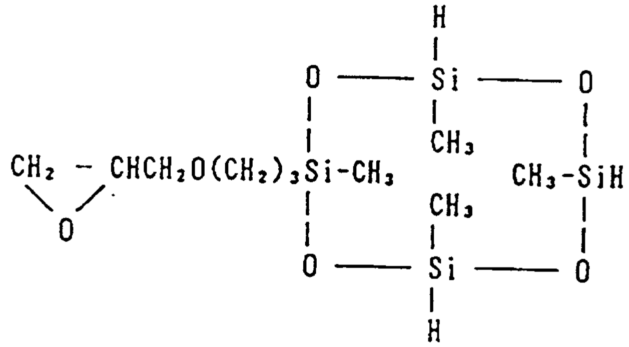

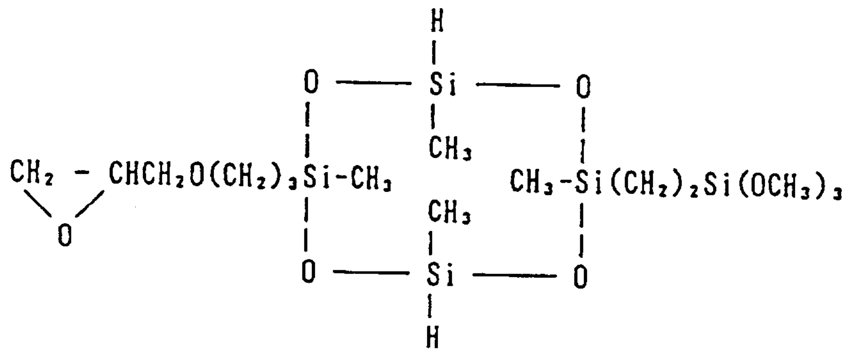

The organosilicon compounds may be used after increasing the degree of polymerization, depending on the purpose. If used, the amount of the adhesive aid is in the range of from 0.5 to 20 parts by weight, preferably from 1 to 10 parts by weight, per 100 parts by weight of the organopolysiloxane (A).

In order to further improve the adhesiveness, trialkylisocyanurates and triallyl trimellitate with or without modification with siloxanes may be further added to the composition of the invention. More specifically, compounds of the following formulae are preferably used

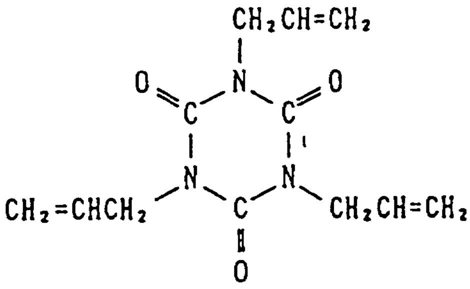

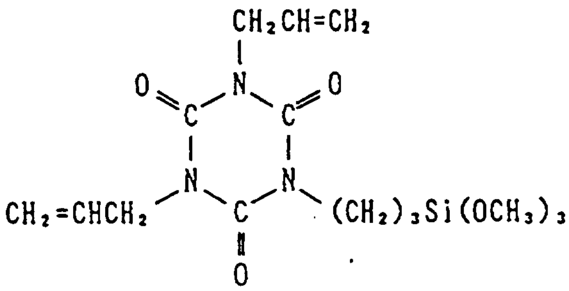

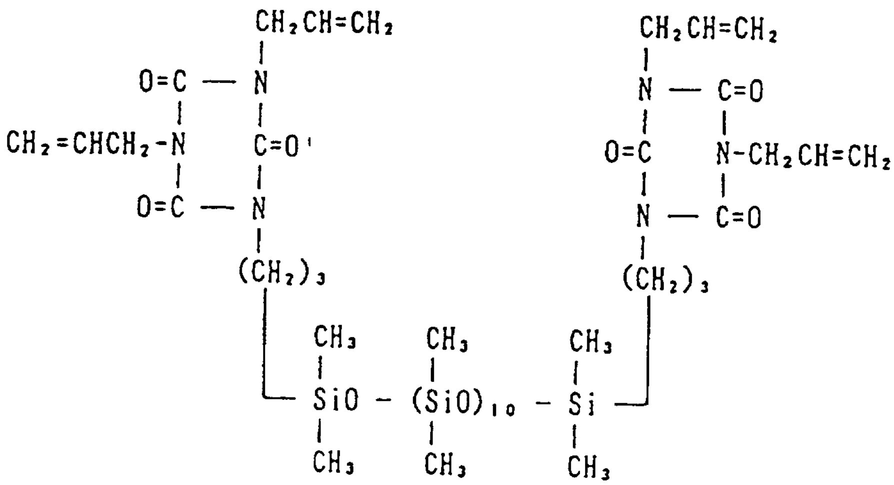

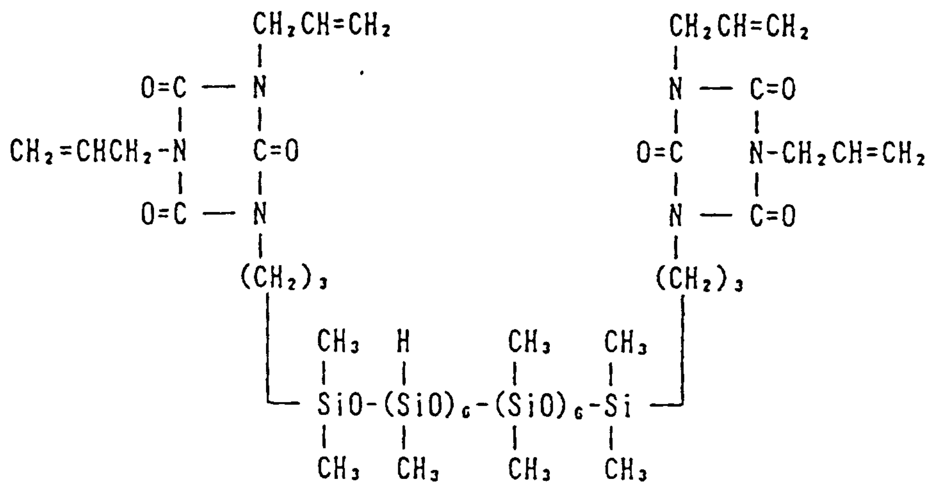

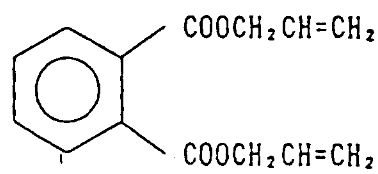

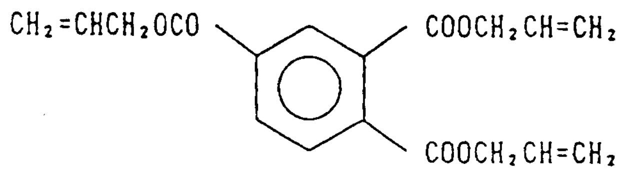

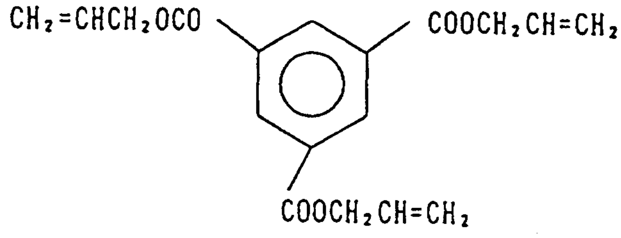

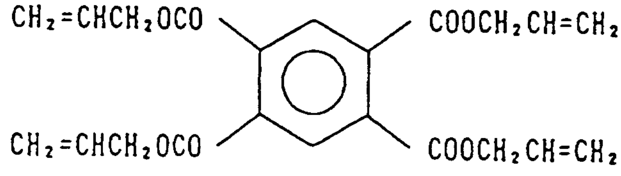

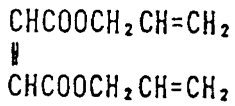

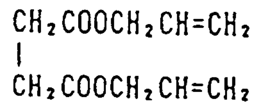

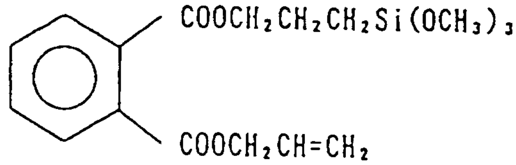

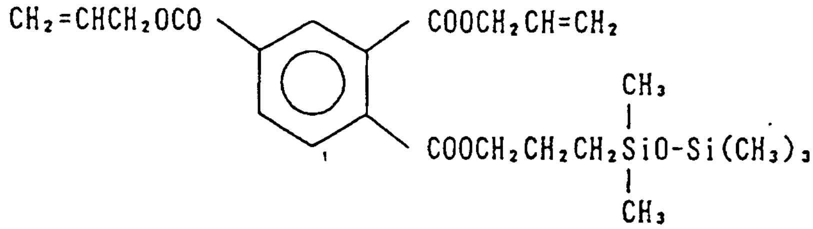

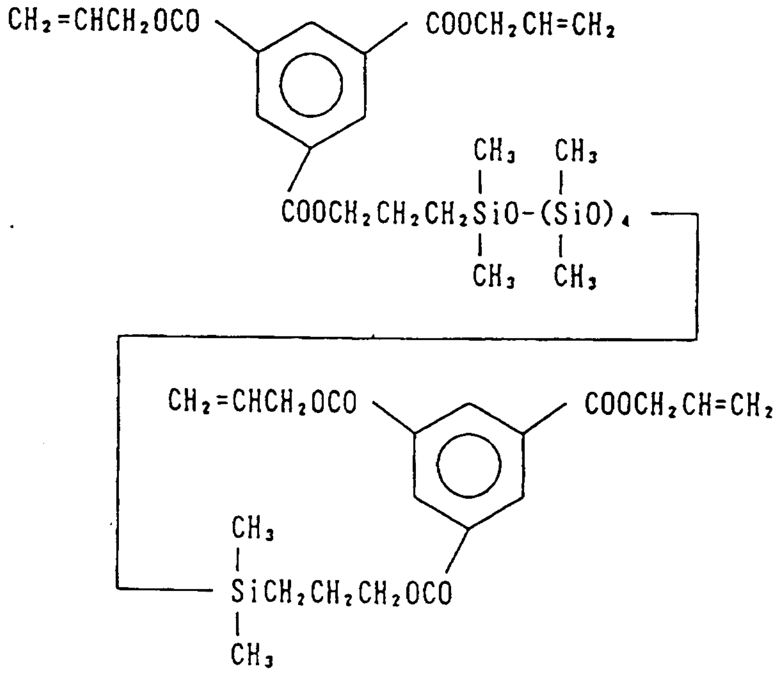

The amount of these compounds is not critical and is generally in an amount of from 0.5 to 3 parts by weight per 100 parts by weight of the organopolysiloxane (A).

Where the primer composition of the invention is used to cause silicone rubber to bond to substrates, it is preferred that the primer composition of the invention is first applied onto a substrate and air-dried for a time not shorter than 15 minutes, preferably 30 to 120 minutes. Subsequently, the air-dried primer layer is baked and cured at a temperature of 100 to 180C for a time of 10 to 120 minutes thereby forming a flexible primer composition layer on the substrate. Then, a condensation reaction-type silicone rubber is set on and bonded to the primer layer.

The type of material for substrate to which the composition of the invention is applicable is not critical. Examples of the material include metals such as iron, aluminium, nickel, chromium, zinc, copper and the like and alloys thereof, and synthetic resins such as phenolic resins, epoxy resins and the like.

The primer composition of the invention is effective in bonding silicone rubbers to various substrates and has thus wide utility in various fields. In particular, the composition is very effective in bonding for industrial rolls for plastic film formation which will be exposed to high temperatures over a long term, or for industrial rolls for corona discharge treatment on the surface of polyethylene film wherein the roll is not only exposed to high temperatures, but also exerted with a great stress under shear at the interface of adhesion. Especially, the composition exhibits good durability against stress under high shear when applied to condensation reaction-type silicone rubbers whose JIS-A hardness after curing is not less than 40.

The present invention is more particularly described by way of examples.

Example 1

There were placed in a stainless steel vessel 100 parts by weight of dimethylpolysiloxane of the following formula which had a viscosity of 100,000 centistokes at 25°C and was terminated with a

trivinylsilyl group at both ends

$$(CH_2{=}CH)_3{-}Si{-}O\left(\begin{matrix}CH_3\\ |\\ Si{-}O\\ |\\ CH_3\end{matrix}\right)_n Si{-}(CH{=}CH_2)_3$$

wherein n is 1200 to 1300. 0.05 parts by weight of a chloroplatinic acid solution in octanol with a Pt content of 2 wt.%, and 0.05 parts by weight of 3-methyl-3-hydroxy-1-butyne, followed by uniform mixing. Thereafter, 3.5 parts by weight of organohydrogenpolysiloxane of the following formula which had hydrogen atoms joined to 10 silicon atoms

$$(CH_3)_3{-}Si{-}O\left(\begin{matrix}CH_3\\ |\\ Si{-}O\\ |\\ H\end{matrix}\right)_{10} Si{-}(CH_3)_3$$

was added to the mixture and uniformly mixed. Moreover, 100 parts by weight of toluene and 15 parts by weight of ethyl polysilicate which was obtained by partial hydrolysis of tetraethoxysilane and had, on average, twelve ethoxy groups in one molecule with a $SiO_2$ content of 40% were added to and mixed with the mixture, thereby obtaining a composition (Primer A).

The primer A was applied onto each of aluminium sheets and thermally reacted at 120°C for 30 minutes. Thereafter, a blocks of a condensation reaction-type RTV silicone rubber KE21 (hardness 70, available from Shin-Etsu Chem. Co., Ltd.) was placed between the Al sheets and cured at 25°C for 3 days to provide a test sample as shown in Fig. 1. A load was applied to the bonded sheets along the opposite directions 6,6 in the figure to measure an adhesion strength under shear. The results are shown in Table 1. In Fig. 1, indicated by 3 is the silicone rubber block, by 4 is a primer composition layer, and by 5 is an aluminium sheet

The primer A was also baked as 4 on the outer surface of each of an iron core 1 and an aluminium core 2 each having a diameter of 30 mm as shown in Fig. 2. A RTV silicone rubber KE 21 sheet 3 was set on the respective cores and cured at room temperature to obtain roll samples each having a 10 mm thick silicone rubber layer. The two rolls were arranged parallel to each other so that they were pressed thereagainst at a distance between the centers of the rolls of 47 mm, followed by rotation at 50 r.p.m. to effect a roll durability test. The results are shown in Table 1.

Example 2

The general procedure of Example 1 was repeated except that during the preparation of the primer A in Example 1, 15 parts by weight of fumed silica (specific surface area: 300 $m^2/g$) which had been surface treated with a trimethylsilyl group was added to and mixed with the mixture prior to the addition of the organohydrogenpolysiloxane, thereby obtaining a composition. The composition is referred to as primer B.

The prime B was subjected to the adhesion strength test under shear and the roll durability test in the same manner as in Example 1. The results are shown in Table 1.

Comparative Example 1

The general procedure of Example 2 was repeated except that 15 parts by weight of ethyl polysilicate obtained by partial hydrolysis of tetraethoxysilane and having on average twelve ethoxy groups in one molecule was not added, thereby obtaining a composition as primer C.

The primer C was subjected to the adhesion strength test under shear and the roll durability test in the same manner as in Example 1. The results are shown in Table 1.

Table 1

| | Example 1 | Example 2 | Comp. Ex. 1 |
|---|---|---|---|
| Adhesive Strength under Shear (kgf/cm$^2$) | 18 | 27 | 3 |
| State of Breakage | primer layer broken | KE21 broken | primer layer and KE21 separated from each other |
| Endurance Test | no separation after revolutions of 30,000 | no separation after revolutions of 30,000 | KE21 separated in both Al and Fe cores after revolutions of 30,000 |

Example 3

100 parts by weight of dimethylpolysiloxane having a viscosity of 30,000 centistokes at 25°C and terminated with a trivinylsilyl group at both ends, 17 parts by weight of fumed silica (specific surface area 300 m$^2$/g) surface treated with a trimethylsilyl group, 0.07 parts by weight of a solution of chloroplatinic acid in octanol with a Pt content of 2 wt.%, 0.08 parts by weight of ethylene cyclohexanol, and 1.0 part by weight of triallyl trimellitate were uniformly mixed together. Thereafter, 2.5 parts by weight of hydrogenpolysiloxane of the following formula which had hydrogen atoms joined to five silicon atoms

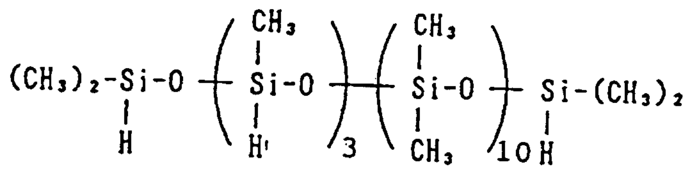

and 3.0 parts by weight of a compound of the following formula

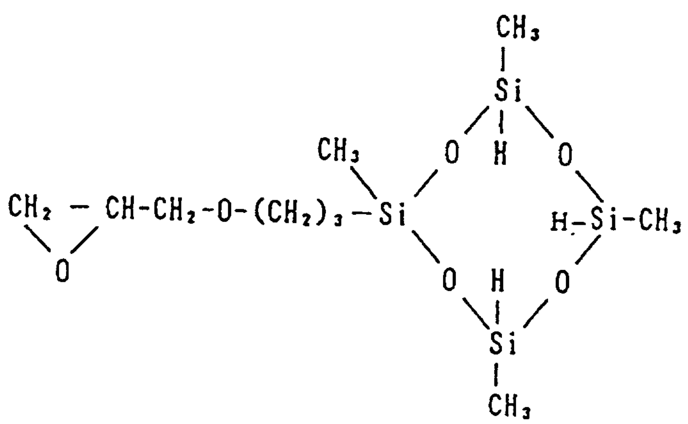

were added to the mixture, followed by further addition of 100 parts by weight of toluene, 2.0 parts by weight of allyltrimethoxysilane and 5.0 parts by weight of vinyltrimethoxysilane The resultant mixture was uniformly mixed to obtain a primer composition as primer D.

The primer D was applied onto various substrates at one end side and baked at 120°C for 30 minutes. Thereafter, a condensation reaction-type RTV silicone rubber KE20 (hardness 55, available from Shin-Etsu Chem. Co., Ltd.) sheet was sandwiched in the same manner as in Example 1 and cured at room temperature for 3 days to obtain test samples for adhesion strength under shear. The results are shown in Table 2.

The test samples of the adhesion strength test under shear as shown in Fig. 1 were each subjected to fifty displacement cycles wherein the substrates of the sample were vertically moved, i.e. pulled and pushed, along the length thereof at intervals of ± 2mm at a rate of 10 mm/minute in one cycle. The results are shown in Table 2.

Comparative Example 2

A commercially available primer composition for condensation reaction-type silicone rubber (carbon functional silane-titanium salt of organic acid, available from Shin-Etsu Chem. Co., Ltd.) was used to effect the adhesion strength test under shear and the durability test. The results are shown in Table 2.

Table 2

| | Example 3 | Comp. Ex. 2 |
|---|---|---|
| Adhesion Strength under Shear Glass | ($kgf/cm^2$): over 28 (glass broken) | 22 (80) |
| Aluminium | 36 (100) | 30 (10) |
| Iron | 35 (100) | 26 ( 0) |
| SUS | 36 (100) | 25 ( 0) |
| PBT | 38 (100) | 4 ( 0) |
| PET | 37 (100) | 3 ( 0) |
| Durability Test: (test piece was subjected to fifty cycles of a shearing stress of ± 2 mm along the length thereof at a rate of 10 mm/minute) | no change | separation |
| The values in parentheses indicate a cohesive failure rate (%). | | |

A primer composition comprises, in combination, an organopolysiloxane having at least two alkenyl groups in one molecule, an organohydrogenpolysiloxane having at least two hydrogen atoms bonded to silicon atoms in one molecule, a platinum catalyst, and an organosilicon compound having the following average unit formula,

$R^1_aX_bSiO_{(4-a-b)/2}$

in which $R^1$ represents a member selected from the group consisting of unsubstituted or substituted monovalent hydrocarbon groups, acryloxy group, a methacryloxy group and an epoxy group, X represents a hydrolyzable group, $0 \leqq a \leqq 3$, and $2 \leqq b \leqq 4$ provided that $2 \leqq a+b \leqq 4$, the organosilicon compound having at least two hydrolyzable groups bonded to the silicon atom in one molecule. The primer composition is effective in adhesion between various substrates and condensation reaction-type silicone rubber therethrough. The composition keeps high adhesion force under severe conditions.

**Claims**

**1.** A primer composition which comprises, in combination:
(A) an organopolysiloxane having at least two alkenyl groups in one molecule;
(B) an organohydrogenpolysiloxane having at least two hydrogen atoms bonded to silicon atoms in one molecule;
(C) a platinum catalyst; and
(D) an organosilicon compound having the following average unit formula,

$R^1_aX_bSiO_{(4-a-b)/2}$

in which $R^1$ represents a member selected from the group consisting of unsubstituted or substituted monovalent hydrocarbon groups, acryloxy group, a methacryloxy group and an epoxy group, X represents a hydrolyzable group, $0 \leqq a \leqq 3$, and $2 \leqq b \leqq 4$ provided that $2 \leqq a+b \leqq 4$, the organosilicon compound having at least two hydrolyzable groups bonded to the silicon atom in one molecule.

**2.** The primer composition according to Claim 1, wherein said organohydrogenpolysiloxane is added in such an amount that the hydrogen atoms joined to silicon atoms of said organohydrogenpolysiloxane are present in an amount of 1.0 to 20 times by mole that of the alkenyl groups present in the organopolysiloxane, the platinum catalyst is present in an amount of from 0.1 to 500 ppm, calculated as Pt, based on the total amount of said organopolysiloxane and said organohydrogenpolysiloxane, and

said organosilicon compound is present in an amount of from 5 to 50 parts by weight per 100 parts by weight of said organopolysiloxane.

3. The primer composition according to Claim 2, wherein when said platinum catalyst is miscible with said organopolysiloxane and said organohydrogenpolysiloxane, the amount is in the range of from 0.1 to 100 ppm, calculated as Pt, based on the total amount of said organopolysiloxane and said organohydrogenpolysiloxane, and when said platinum catalyst is in the form of a solid, the amount is in the range of from 20 to 500 ppm, calculated as Pt, based on the total amount of said organopolysiloxane and said organohydrogenpolysiloxane.

4. The primer composition according to Claim 1, wherein said organopolysiloxane has at least two vinyl groups in the molecule.

5. The primer composition according to Claim 4, wherein said organopolysiloxane further comprises at least one unsubstituted or substituted monovalent hydrocarbon group having from 1 to 10 carbon atoms.

6. The primer composition according to Claim 1, wherein said organopolysiloxane is a linear diorganopolysiloxane of the following formula

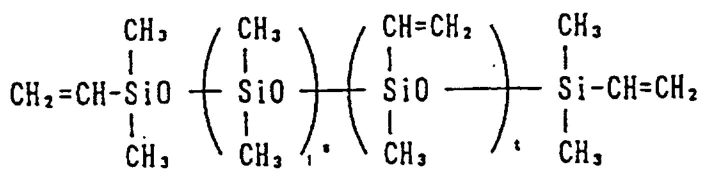

wherein s is a positive integer and t is zero or a positive integer provided that s + t is a positive integer not larger than 2000.

7. The primer composition according to Claim 1, wherein said organopolysiloxane is a linear diorganopolysiloxane of the following formula

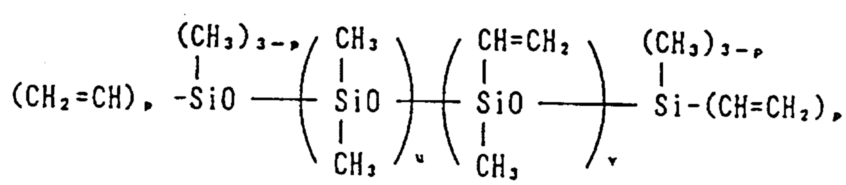

wherein p is 2 or 3, u is a positive integer and v is zero or a positive integer provided that u + v is a positive integer not larger than 2000.

8. The primer composition according to Claim 1, wherein said organopolysiloxane is a linear diorganopolysiloxane of the following formula

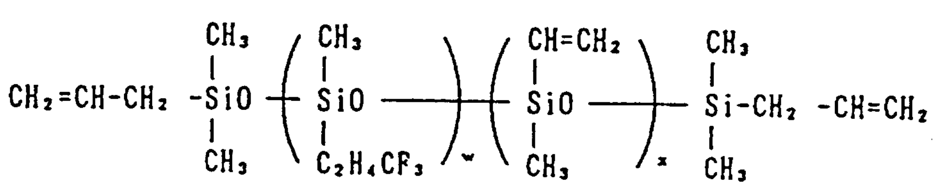

wherein w is a positive integer and x is zero or a positive integer provided that w + x is a positive integer not larger than 2000.

**9.** The primer composition according to Claim 1, wherein said organohydrogensiloxane is of the following general formula

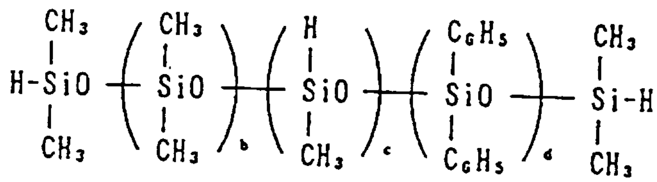

wherein b, c and d are, respectively, zero or a positive integer provided that the number of silicon atoms in said organohydrogensiloxane is not larger than 400.

**10.** The primer composition according to Claim 1, wherein said organohydrogensiloxane is of the following general formula

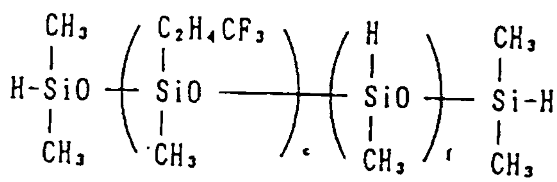

wherein e and f are, respectively, zero or a positive integer provided that the number of silicon atoms in said organohydrogensiloxane is not larger than 400.

**11.** The primer composition according to Claim 1, wherein said organohydrogensiloxane is of the following general formula

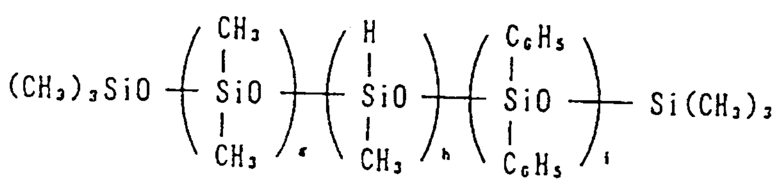

wherein g and i are, respectively, zero or a positive integer and h is an integer not smaller than 2 provided that the number of silicon atoms is not larger than 400.

**12.** The primer composition according to Claim 1, wherein said organohydrogensiloxane is of the following formula

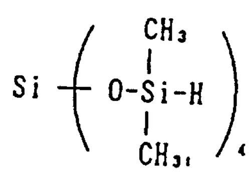

**13.** The primer composition according to Claim 1, wherein said organohydrogensiloxane is of the following formula

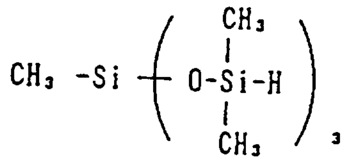

**14.** The primer composition according to Claim 1, wherein said organohydrogensiloxane is of the following formula

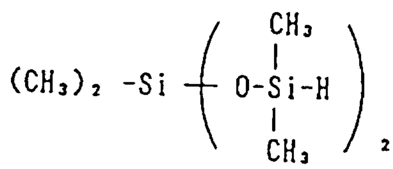

**15.** The primer composition according to Claim 1, wherein said organohydrogensiloxane is of the following formula

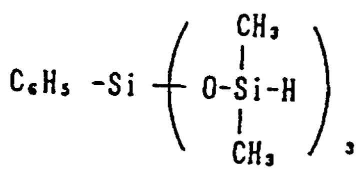

**16.** The primer composition according to Claim 1, wherein said organohydrogensiloxane is of the following formula

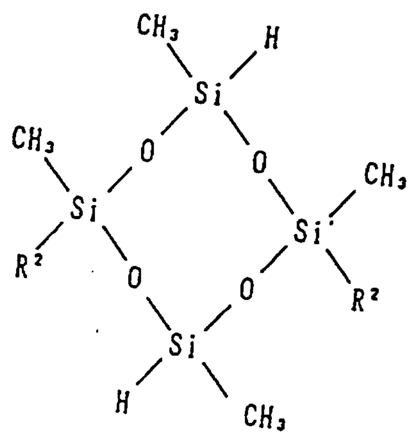

wherein each $R^2$ represents a hydrogen atom, a methyl group, a propyl group or a trimethylsiloxy group.

**17.** The primer composition according to Claim 1, wherein said organosilicon compound is a member selected from the group consisting of methyltrimethoxysilane, methyltriethoxysilane, vinyltrimethoxysilane, tetraethoxysilane, tetrapropoxysilane, methyltriacetoxysilane, vinyltris(1-methylvinyloxy)silane, vinyltris( $\beta$ -methoxyethoxy)silane, $\gamma$ -methacryloxypropyltrimethoxysilane, $\gamma$ -acryloxypropyltriethoxysilane, allyltrimethoxysilane, allyltriethoxysilane, $\gamma$ -glycidoxypropyltrimethoxysilane, $\beta$ -(3,4-epoxycyclohexyl)ethyltrimethoxysilane, and partially hydrolyzed condensates of one or more compounds

defined above.

**18.** The primer composition according to Claim 1, further comprising, as an adhesion aid, an organosilicon compound of the following formula present in an amount of from 0.5 to 20 parts by weight per 100 parts by weight of said organopolysiloxane

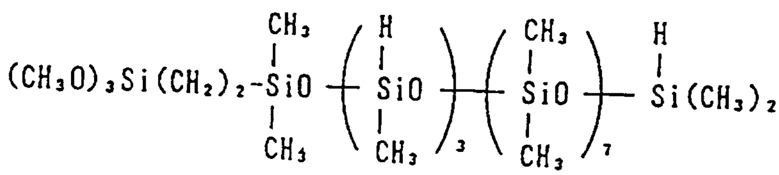

**19.** The primer composition according to Claim 1, further comprising, as an adhesion aid, an organosilicon compound of the following formula present in an amount of from 0.5 to 20 parts by weight per 100 parts by weight of said organopolysiloxane

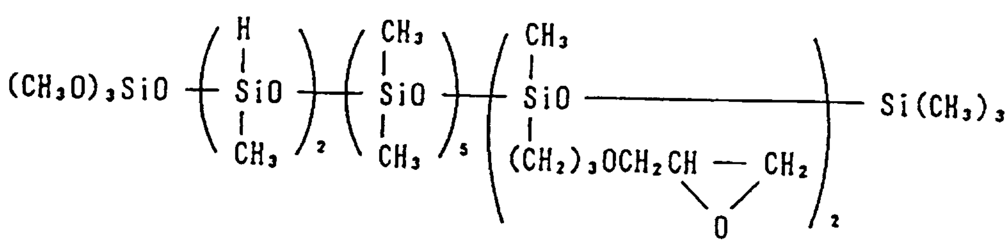

**20.** The primer composition according to Claim 1, further comprising, as an adhesion aid, an organosilicon compound of the following formula present in an amount of from 0.5 to 20 parts by weight per 100 parts by weight of said organopolysiloxane

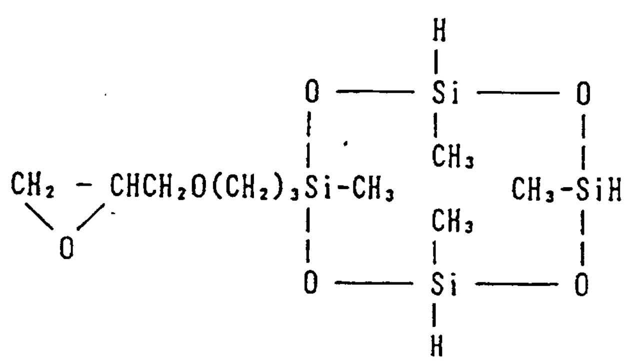

**21.** The primer composition according to Claim 1, further comprising, as an adhesion aid, an organosilicon compound of the following formula present in an amount of from 0.5 to 20 parts by weight per 100 parts by weight of said organopolysiloxane

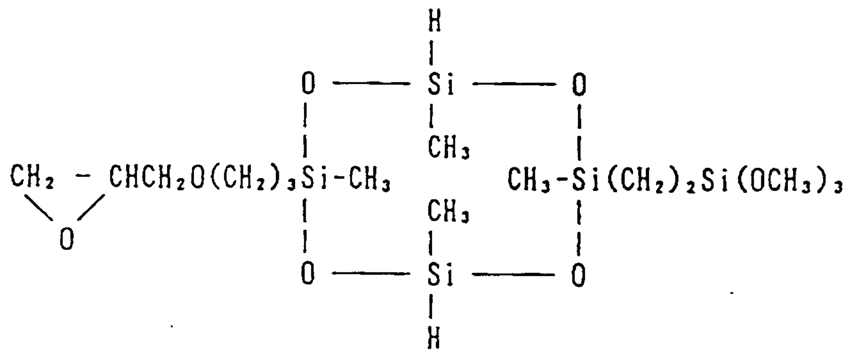

22. The primer composition according to Claim 1, further comprising a member selected from the group consisting of trialkyl cyanurates and triallyl trimellitate with or without modification with siloxanes, said member being present in an amount of 0.5 to 3 parts by weight per 100 parts by weight of said organopolysiloxane.

23. The primer composition according to Claim 22, wherein said member is a compound of the following formula

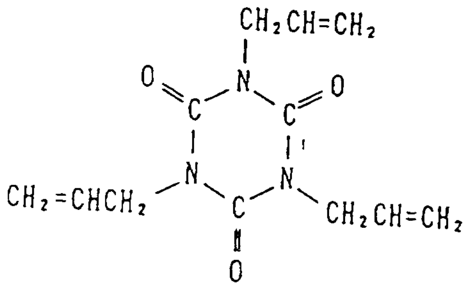

24. The primer composition according to Claim 22, wherein said member is a compound of the following formula

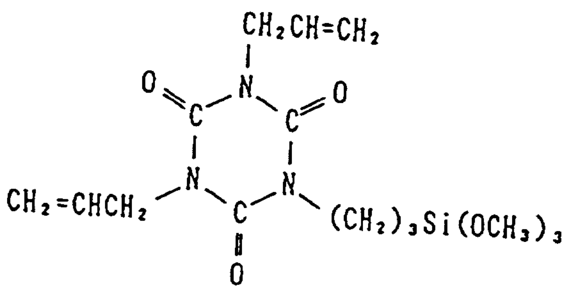

25. The primer composition according to Claim 22, wherein said member is a compound of the following formula

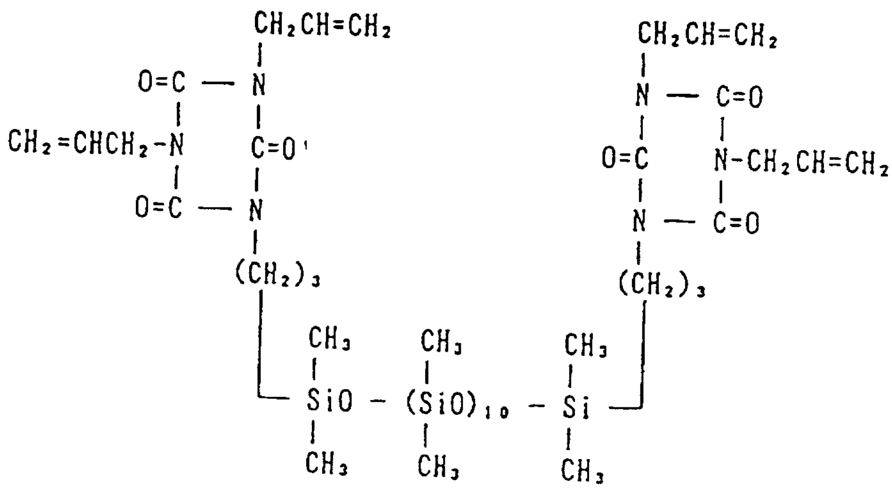

26. The primer composition according to Claim 22, wherein said member is a compound of the following formula

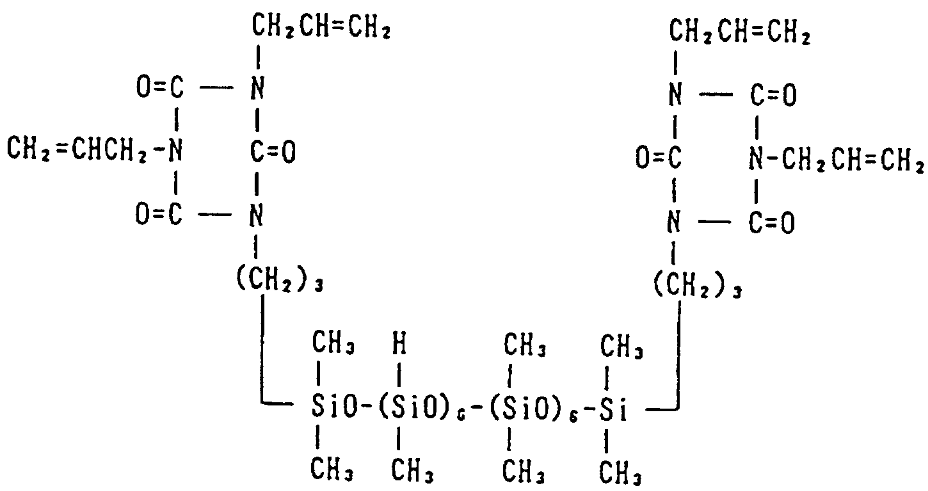

27. The primer composition according to Claim 22, wherein said member is a compound of the following formula

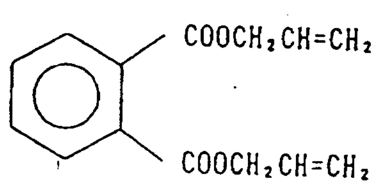

28. The primer composition according to Claim 22, wherein said member is a compound of the following formula

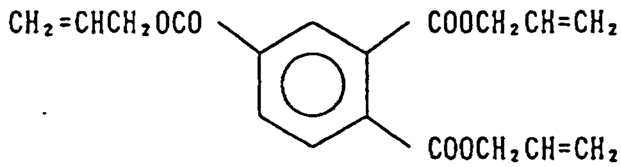

**29.** The primer composition according to Claim 22, wherein said member is a compound of the following formula

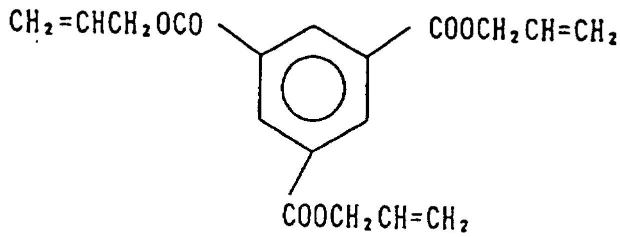

**30.** The primer composition according to Claim 22, wherein said member is a compound of the following formula

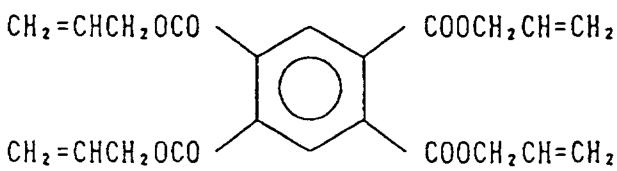

**31.** The primer composition according to Claim 22, wherein said member is a compound of the following formula

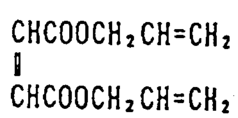

**32.** The primer composition according to Claim 22, wherein said member is a compound of the following formula

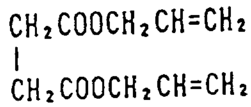

**33.** The primer composition according to Claim 22, wherein said member is a compound of the following formula

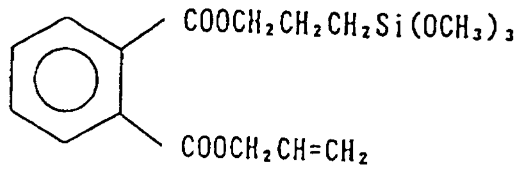

**34.** The primer composition according to Claim 22, wherein said member is a compound of the following formula

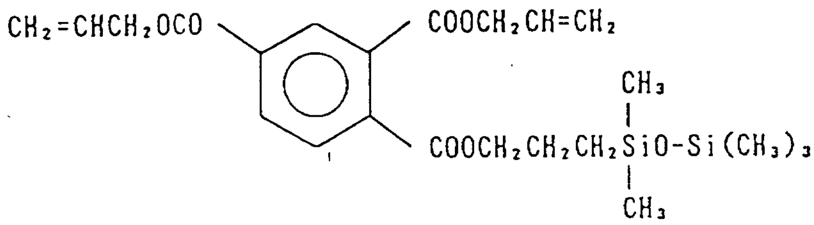

**35.** The primer composition according to Claim 22, wherein said member is a compound of the following formula

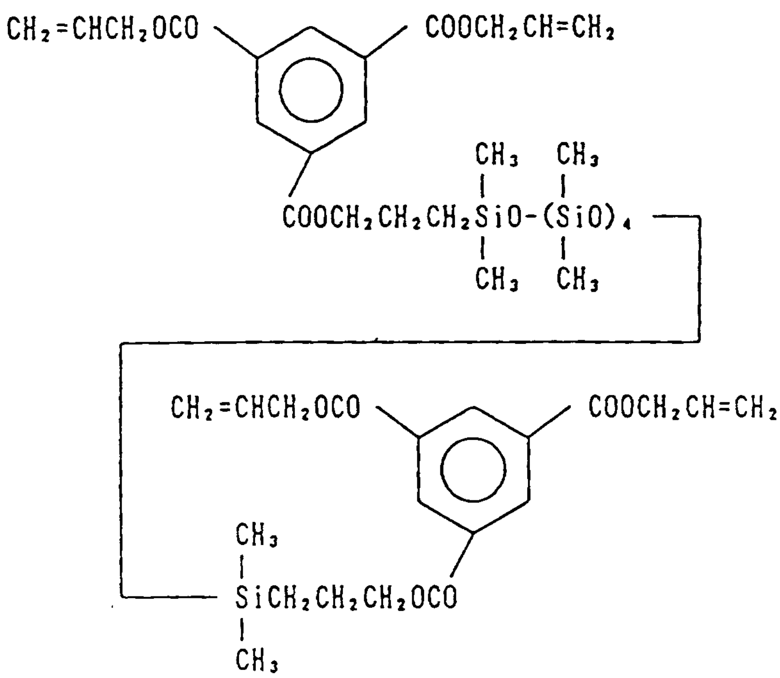

**36.** A cured product obtained from the primer composition defined in Claim 1 wherein said cured product is in the form of a layer provided between a cured member of condensation reaction-type silicone rubber and a substrate made of a material selected from the group consisting of metals, metal alloys and synthetic resins whereby said layer serves as an adhesive for both the cured member and the substrate.

FIG. 1

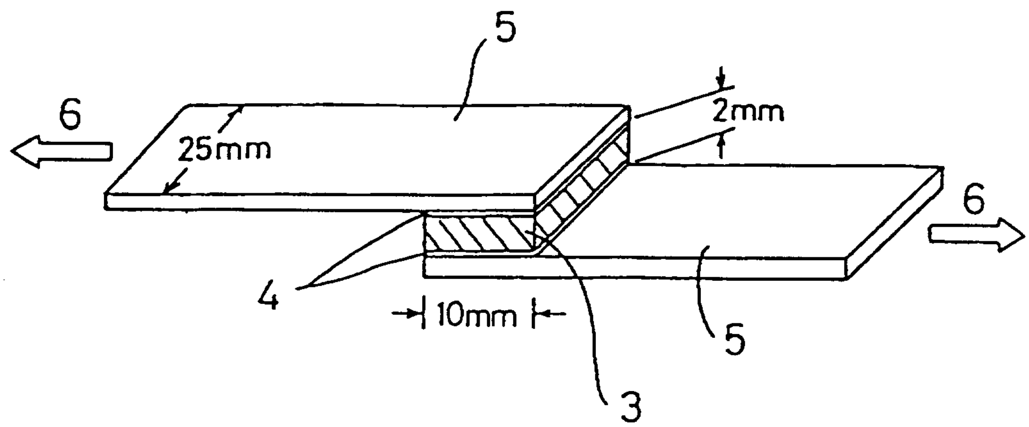


FIG. 2

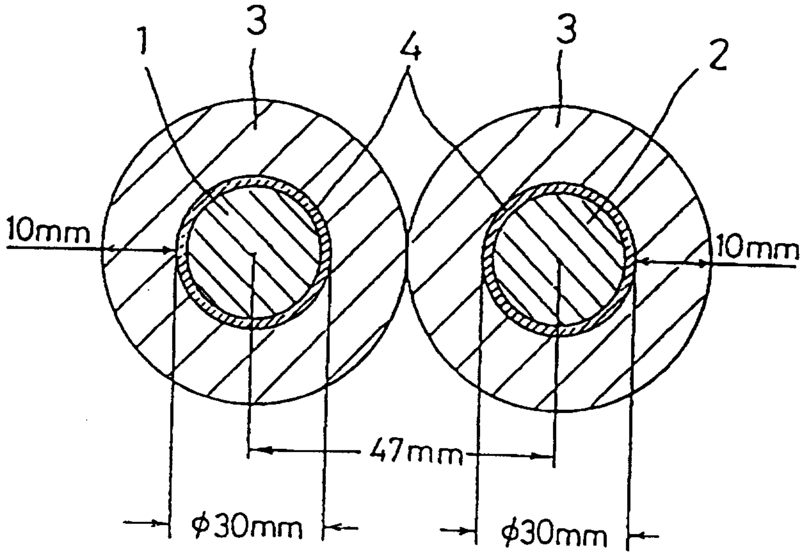

European Patent Office

# EUROPEAN SEARCH REPORT

Application Number

EP 92 11 6484
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | CHEMICAL ABSTRACTS, vol. 102, no. 16, 22 April 1985, Columbus, Ohio, US; abstract no. 133394c, 'Fixation roll from liq. silicone rubber.' page 67 ; * abstract * | 1,3-5, 11,16, 17,36 | C09D183/07 C09J183/07 C08J5/12 |
| Y | & JP-A-59 220 349 (MINOLTA CAMERA CO., LTD.) --- | 1-5,9, 12,17, 20, 22-24, 27-32,36 | |
| Y | EP-A-0 406 664 (TOSHIBA SILICONE CO., LTD.) * claims * * page 4, line 33 - page 5, line 22 * * page 5, line 29 - page 7, line 40 * * page 7, line 43 - line 46 * * page 7, line 48 - line 50 * * page 8, line 8 - line 13 * --- | 1-5,12, 17, 22-24,36 | |
| | | | TECHNICAL FIELDS SEARCHED (Int. Cl.5 ) |
| Y,P | DATABASE WPIL Section Ch, Week 9134, 23 October 1991 Derwent Publications Ltd., London, GB; Class A26, AN 91-249495 & JP-A-3 163 183 (SHINETSU CHEM. IND. K.K.) 15 July 1991 * abstract * --- | 1-5,9, 20,22, 27-32,36 | C08L C09D C09J C08J C08K |
| A | US-A-4 064 313 (TAKIGUCHI ET AL.) * claims * * column 10, line 25 - line 66 * --- | 1,17,22, 31,31,36 | |

-/--

The present search report has been drawn up for all claims

| Place of search | Date of completion of the search | Examiner |
|---|---|---|
| THE HAGUE | 13 NOVEMBER 1992 | HOLLENDER C.J.F |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

# EUROPEAN SEARCH REPORT

Application Number

EP 92 11 6484
Page 2

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.5 ) |
| A | PATENT ABSTRACTS OF JAPAN<br>vol. 6, no. 235 (C-136)(1113) 20 November 1982<br>& JP-A-57 137 355 ( SHINETSU KAGAKU KOGYO K.K. ) 24 August 1982<br>* abstract *<br>----- | 1,22,24, 25 | |
| | | | TECHNICAL FIELDS SEARCHED (Int. Cl.5 ) |

The present search report has been drawn up for all claims

| Place of search | Date of completion of the search | Examiner |
|---|---|---|
| THE HAGUE | 13 NOVEMBER 1992 | HOLLENDER C.J.F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document